(19) Europäisches Patentamt
European Patent Office
Office européen des brevets

(11) EP 0 843 455 B1

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.[7]: **H04M 9/08**, H04B 3/23

(21) Anmeldenummer: **97119760.3**

(22) Anmeldetag: **12.11.1997**

(54) **Verfahren und Anordnung zur adaptiven Echokompensation**

Method and apparatus for adaptive echo cancellation

Procédé et dispositif d'annulation adaptive d'écho

(84) Benannte Vertragsstaaten:
**AT BE CH DE ES FI FR GB IT LI NL SE**

(30) Priorität: **15.11.1996 DE 19647276**

(43) Veröffentlichungstag der Anmeldung:
**20.05.1998 Patentblatt 1998/21**

(73) Patentinhaber: **ALCATEL**
**75008 Paris (FR)**

(72) Erfinder:
- **Matt, Hans Jürgen, Dr.**
  **71686 Remseck (DE)**
- **Walker, Michael**
  **73666 Baltmannsweiler (DE)**
- **Ackermann, Uwe**
  **71691 Freiberg/N. (DE)**

(74) Vertreter: **Rausch, Gabriele, Dr.**
**Alcatel**
**Intellectual Property Department, Stuttgart**
**70430 Stuttgart (DE)**

(56) Entgegenhaltungen:
**EP-A- 0 530 423** **EP-A- 0 708 535**
**FR-A- 2 674 389** **US-A- 4 922 530**

- **OCHIAI K ET AL: "ECHO CANCELER WITH TWO ECHO PATH MODELS" IEEE TRANSACTIONS ON COMMUNICATIONS, IEEE INC. NEW YORK, US, Bd. 25, Nr. 6, 1. Juni 1977 (1977-06-01), Seiten 589-595, XP000570738 ISSN: 0090-6778**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren und eine Anordnung zur adaptiven Echokompensation in einem Übertragungssystem, bei dem eine unerwünschte Kopplung zwischen einem Signalweg in Empfangsrichtung und einem Signalweg in Senderichtung auftritt. Technische Anwendung findet ein solches Verfahren beispielsweise zur Echounterdrückung beim Freisprechen, bei der Übertragung von analogen oder digitalen Signalen über lange Leitungen oder über 2Draht/4Draht-Umsetzer und in Mobilfunknetzen sowohl nach dem DECT-Standard als auch nach dem GSM-Standard.

Die Grundidee bei der Echokompensation besteht darin, ein reales System, beispielsweise das System Lautsprecher-Raum-Mikrofon beim Freisprechen durch ein System mit gleichen Übertragungseigenschaften nachzubilden, vgl. R. Wehrmann u.a.: Signalverarbeitungsverfahren zur Verbesserung der Sprachkommunikation über Freisprecheinrichtungen, Der Fernmeldeingenieur, Verlag für Wissenschaft und Leben Georg Heidecker GmbH, Erlangen, 48. Jahrgang, Oktober 1994, S. 27-29. Das beim Empfänger eintreffende Signal durchläuft dann das reale und das nachgebildete System. Von den realen Echosignal wird dann das durch das nachgebildete System erzeugte Echosignal subtrahiert, so daß bis auf einen Restfehler das Echo kompensiert wird.

Zur Nachbildung eines Systems haben sich digitale Filter, insbesondere FIR-Filter, finite impulse response Filter, als besonders geeignet erwiesen.

Gemäß Fig. 1 besteht ein FIR-Filter 1 im wesentlichen aus einer Anzahl n in Kette geschalteter Speicher 11, ..., 1 n, die jeweils einem Abtastwert $x(k-\tau)$ des Eingangssignals speichern sowie aus einer Anzahl Multiplikatoren 21, ..., 2n, mit denen das Ausgangssignal eines jeden Speichers 11, ..., 1n mit einem Satz von Filterkoeffizienten $c_i$ mit $1 \le i \le n$ multiplikativ bewertet wird und aus einem Summierer 3, mit dem alle bewerteten Signale zu einem Ausgangssignal 4 summiert werden. Die Filterkoeffizienten $c_i$ müssen so eingestellt sein, daß zu jedem realen Echo ein dem Echo entsprechendes Signal von dem FIR-Filter 1 nachgebildet wird, das sodann von dem gestörten Signal subtrahiert wird, um die Echos zu eliminieren. Im allgemeinen können die Echos durch das FIR-Filter 1 mit sinnvollem technischen Aufwand nur mit einer begrenzten Genauigkeit nachgebildet werden, so daß das Echo nicht vollkommen aus dem gestörten Signal eliminiert werden kann, und somit keine vollständige Echokompensation sondern nur eine Echodämpfung erreicht wird.

Die richtige Einstellung der Filterkoeffizienten $c_i$ hat somit erheblichen Einfluß auf die erreichbare Echodämpfung. Sie kann zunächst einmalig mit genauen Meßmitteln vorgenommen werden. Eine solche Verfahrensweise hat jedoch den Nachteil, daß bei jeder Änderung des realen Echos eine neue Messung vorgenommen werden muß und eine Neueinstellung der Filterkoeffizienten $c_i$ erforderlich ist.

Es ist bekannt, eine fortlaufende Messung mit automatischer Nachjustierung der Filterkoeffizienten $c_i$ nach dem NLMS-(normalized least mean square) Algorithmus vorzunehmen, vgl. R. Wehrmann u.a.: Signalverarbeitungsverfahren zur Verbesserung der Sprachkommunikation über Freisprecheinrichtungen, Der Fernmeldeingenieur, Verlag für Wissenschaft und Leben Georg Heidecker GmbH, Erlangen, 49. Jahrgang, Januar 1995, S. 8-10. Die Filterkoeffizienten $c_i(k)$ zum Zeitpunkt k werden aus denen zum Zeitpunkt (k-1) gemäß

$$(1) \qquad c_i(k)=c_i(k-1) + \alpha \cdot \frac{y(k) \cdot x(k-\tau-i)}{\sum_{q=1}^{n} x^2(k-\tau-q)}$$

berechnet. Dabei bedeuten:

| | |
|---|---|
| $c_i$ (k) | i-ter Filterkoeffizient zum Zeitpunkt k |
| $\alpha$ | Schrittweite $0 < \alpha \le 2$ |
| y(k) | Abtastwert des Mikrofonsignals mit gedämpftem Echo zum Zeitpunkt k |
| $\tau$ | die kleinste Verzögerung nach einer Anregung bis zum Auftreten eines Echos; entspricht der kürzesten Signallaufzeit vom Lautsprecher zum Mikrofon |
| n | Länge des Filters |
| $x(k-\tau-i)$ | Abtastwert des Lautsprechersignals |

$\Sigma x^2$ (.) Signalenergie im Filter

Mit dem NLMS-Algorithmus können die Filterkoeffizienten $c_i$ rasch und ausreichend genau eingestellt werden, wenn außer den Echos keine weiteren Störsignale vorhanden sind. Seine Einstellgeschwindigkeit wird dabei wesentlich von der Schrittweite $\alpha$ bestimmt. Ist die Schrittweite $\alpha$ klein, so ist die Einstellgeschwindigkeit klein, sie wird mit wachsender Schrittweite $\alpha$ größer und erreicht ihren größten Wert bei $\alpha$=2. Wenn die Echos ein breitbandiges, gleichmäßiges Leistungsdichtespektrum haben, werden mit dem NLMS-Algorithmus gute Konvergenzeigenschaften erreicht.

Bei ungeeigneter Anregung , beispielsweise durch sinusförmige Signale, sowie bei Vorhandensein von Störsignalen, beispielsweise wenn der lokale Sprecher spricht, werden die Filterkoeffizienten $c_i$ durch den NLMS-Algorithmus falsch eingestellt. Dies geschieht um so schneller, je größer die Schrittweite a ist. Um eine solche Fehleinstellung der Filterkoeffizienten $c_i$ zu vermeiden, ist es bekannt, die Größe der Schrittweite a in Abhängigkeit von der aktuellen Signalsituation zu steuern, um eine für den NLMS-Algorithmus geeignete Signalsituation zur Bestimmung der Filterkoeffizienten $c_i$ ausnutzen zu können, vgl. DE 44 30 189.

Dennoch treten Signalsituationen auf, die trotz adaptiver Steuerung der Schrittweite $\alpha$ zu Fehleinstellungen der Filterkoeffizienten $c_i$ führen. Eine besonders ungünstige Signalsituation für den NLMS-Algorithmus liegt vor, wenn zusätzlich zu den Echos am Ausgang des Mikrofons, Signal ms(t) in Fig. 1, Störsignale durch externe Störquellen auftreten. Derartige Störsignale können beispielsweise von einem aktiven lokalen Sprecher oder durch Hintergrundgeräusche oder durch nichtlineare Effekte in A/D-Wandlern oder durch nicht harmonische Gerhäuseresonanzen von Lautsprechern und deren Gehäuse erzeugt werden. Diese Störsignale können die Einstellung der Filterkoeffizienten $c_i$ kurzfristig so verändern, daß das FIR-Filter vorhandene Echos nicht kompensiert und in ungünstigen Fällen sogar zusätzliche Echos verursacht und somit die Gesamtsituation verschlechtert. Selbst eine im Mittel gute Echodämpfung, beispielsweise 30dB, schließt Zeitabschnitte nicht aus, in denen durch das FIR-Filter deutlich zusätzliche Störungen verursacht werden, so daß eine natürliche Sprachübertragung nicht mehr gewährleistet ist und in bestimmten Anwendungsfällen, beispielsweise bei Konferenzbetrieb, auf Freisprecheinrichtungen deshalb ganz verzichtet wird.

EP 0 708 535 A1 beschreibt eine Methode, eine "double talk" Situation durch einen Echo-Kompensator zu detektieren, der das Echo einer Gabelschaltung beim Übergang von einer Vierdraht zu einer Zweidrahtleitung kompensiert. Bei diesen Verfahren werden die Filterkoeffizienten mittels eines "learning identification algorithm" bestimmt. Die berechneten Filterkoeffizienten werden sodann mit den Impuls-Antworten vorgegebener Gabelschaltungen verglichen. Falls die Fehler ein vorgegebenes Maß überschreiten, so wird eine "double talk" Situation detektiert.

Daraus resultiert die Aufgabe, ein Verfahren und eine Anordnung für die Echokompensation anzugeben, die es unter Anwendung des NLMS-Algorithmus zur Bestimmung der Filterkoeffizienten $c_i$ für ein digitales Filter ermöglichen, auch bei kurzzeitigen Störungen die aktuellen Filterkoeffizienten so zu bestimmen, daß eine Fehleinstellung des digitalen Filters vermieden wird und eine natürliche Sprachübertragung möglich ist.

Diese Aufgabe wird erfindungsgemäß durch das im ersten Anspruch beschriebene Verfahren und durch die im elften Anspruch angegebene Anordnung gelöst. In den Unteransprüchen sind Varianten des Verfahrens angegeben, die sich durch den Aufwand für die Realisierung und das Einsatzgebiet voneinander unterscheiden.

Das Wesen der Erfindung besteht darin, daß ein Fehlermaß durch Vergleich eines Satzes Filterkoeffizienten mit einer Hüllkurve ermittelt wird und daß das Fehlermaß als Grundlage zur Auswahl eines jeweils für die Einstellung des FIR-Filters günstigsten Satzes Filterkoeffizienten dient.

Die Erfindung wird nunmehr an einem Ausführungsbeispiel erläutert. In der dazugehörigen Zeichnung zeigen:

Fig. 1 eine Freisprechanordnung nach dem bekannten Stand der Technik mit einem adaptiven FIR-Filter,

Fig. 2 ein Diagramm mit einem typischen Verlauf der Filterkoeffizienten $c_i$ zu einem Zeitpunkt k als Funktion von i für eine korrekte Filtereinstellung,

Fig. 3 ein Diagramm mit einem typischen Verlauf der Filterkoeffizienten $c_i$ zu einem Zeitpunkt k als Funktion von i für eine schlechte Einstellung des Filters,

Fig. 4 ein Diagramm für einen Verlauf der Beträge der Filterkoeffizienten $c_i$, der von einer berechneten Hüllkurve gemäß Gl. (7) begrenzt wird,

Fig. 5 ein Diagramm für einen Verlauf der Beträge der Filterkoeffizienten $c_i$, der von einer berechneten Hüllkurve gemäß Gl. (8) begrenzt wird,

Fig. 6 eine Darstellung eines Zeitfensters mit einer Anzahl aufeinanderfolgender Sätze Filterkoeffizienten mit den jeweils dazugehörigen Fehlermaßen,

Fig. 7 ein Schaltbild einer Schaltungsanordnung zur Durchführung des erfindungsgemäßen Verfahrens und

Fig. 8 ein Diagramm für einen Verlauf der Beträge der Filterkoeffizienten $c_i$ bei einem akustischen Weg mit unterschiedlichen Schallgeschwindigkeiten mit einer daraus resultierenden übergeordneten Hüllkurve.

In Fig. 1 ist das Entstehen von Echos am Beispiel einer Freisprecheinrichtung eines Telekommunikationsendgerätes dargestellt. Echos entstehen beim Freisprechen dadurch, daß ein Signal von einem Lautsprecher L auf ein Objekt im Raum trifft, dort reflektiert wird und zu einem Mikrofon M gelangt. Das Signal durchläuft dabei eine Strecke s vom Lautsprecher L über einen Reflektor R1 zum Mikrofon M und verliert kontinuierlich an Energie. Dem zurückgelegten Weg s entspricht eine Zeit t, um die das Signal vom Lautsprecher L später am Mikrofon M eintrifft. Es ist

(2) $$s=v \cdot t$$

mit v=Schallgeschwindigkeit.

Der Schalldruckpegel sd(t) am Mikrofon M nimmt dabei umgekehrt proportional mit dem Weg s des Echos also auch umgekehrt proportional mit der Laufzeit t des Echos ab. Das elektrische Mikrofonsignal ms(t) am Ausgang des Mikrofons M ist proportional zum Schalldruckpegel sd(t). Das bedeutet

(3) $$sd(t) \sim s^{-1}$$

$$sd(t) \sim t^{-1}$$

und

(4) $$ms(t) \sim sd(t) \qquad ,\text{d.h. } ms(t) \sim t^{-1}$$

Daher zeigen die Diagramme von von Echos herrührenden Einstellungen der Filterkoeffizienten $c_i$ einen in Fig. 2 dargestellten typischen Verlauf. Bei einem solchen Verlauf gibt es immer für ein bestimmtes ix einen größten Filterkoeffizienten $|c_{ix}| = c_{max}$ unter den ersten Filterkoeffizienten $c_i$, dessen Größe von dem Schall herrührt, der auf direktem Weg von dem Lautsprecher L zu dem Mikrofon M gelangt. Ausgehend von diesem maximalen Filterkoeffizient $c_{max}$ werden alle weiteren Filterkoeffizienten $c_i$ kleiner, da sie in der Regel Reflexionen entsprechen, deren Wege größer als der direkte Weg von dem Lautsprecher L zu dem Mikrofon M sind. Die Beträge der richtig eingestellten Filterkoeffizienten $c_i$ müssen also, wegen des zeitlichen Abstandes zwischen ihnen, der einer zunehmenden Entfernung zu dem Mikrofon M entspricht, innerhalb einer gemäß Gleichung (3) abklingenden Hüllkurve liegen. Eine Überschreitung dieser Hüllkurve zeigt damit sehr wahrscheinlich eine Falscheinstellung eines oder mehrerer Filterkoeffizienten $c_i$ an. Da nicht zu allen Zeitpunkten Echos auftreten, können einige Filterkoeffizienten $c_i$ sehr klein oder Null sein.

Ein Beispiel einer typisch schlechten Einstellung der Filterkoeffizienten $c_i$ ist in Fig. 3 dargestellt. Der Verlauf der Werte der Filterkoeffizienten $c_i$ schwankt sehr stark. Neben einem absoluten Maximum treten mehrere weitere Maxima auf. Die Hüllkurve der Werte der Filterkoeffizienten $c_i$ hat im weitesten Sinn Ähnlichkeit mit einer abklingenden Sinusfunktion.

Erfindungsgemäß wird nunmehr eine voraussichtliche Hüllkurve für die Betragswerte der Filterkoeffizienten $c_i$ berechnet und sodann geprüft, ob die Betragswerte der Filterkoeffizienten $c_i$ innerhalb dieser Hüllkurve liegen oder ob sie davon abweichen. Die Hüllkurve der Filterkoeffizienten $c_i$ gemäß Fig. 4 stellt somit a priori Werte hoher Wahrscheinlichkeit bereit. In Fig. 5 ist der Verlauf der Filterkoeffizienten 51 gemäß einer Hüllkurve dargestellt im Vergleich zu einem Verlauf der Betrage Filterkoeffizienten 52 wie er praktisch auftreten kann.

Der voraussichtliche Verlauf der Hüllkurve der Filterkoeffizienten $c_i$ läßt sich aus den physikalischen Randbedingungen gemäß den Gleichungen (2), (3) und (4) sowie dem zeitlichen Abstand $T\alpha$ zwischen aufeinanderfolgenden Filterkoeffizienten $c_i$ und $c_{i-1}$ schätzen. Ferner wird angenommen, daß die Hüllkurve durch den maximalen Filterkoeffizienten $c_{imax}$ verläuft. Der zeitliche Abstand $T\alpha$ ergibt sich aus der Abtastfrequenz fa gemäß

(5) $$T\alpha=\frac{1}{fa}$$

und daraus der Verlauf der Hüllkurve H(j) zum Zeitpunkt j

$$(6) \qquad H(j)=\{h_1(j), h_2(j), h_3(j), ..., h_n(j)\}.$$

Weil $h_i(t) \sim ms(t)$ und $h_i(t) \sim s(t)^{-1}$ wird zum Zeitpunkt k $h_i(k) \sim (i \cdot v \cdot Ta)^{-1}$, ferner muß $h_i(k)_{i=ix}=c_{max}(k)$ sein. Daraus folgt

$$(7) \qquad h_i(j)=\begin{cases} c_{max}(j) \cdot \dfrac{ix - i_0}{i - i_0} & \text{für } ix \leq i \leq n \\ 0 & \text{für } i < ix \end{cases}$$

Ein typischer Verlauf einer solchen Hüllkurve ist in Fig. 4 gezeigt. Dabei ist der Wert $i_0$=0, wenn der Anfangswert i der Messung der Filterkoeffizienten $c_i$ bekannt und gleich null ist.

Da oftmals nicht bekannt ist, wo der genaue Nullpunkt $i=i_0$ einer Messung der Filterkoeffizienten $c_i$ liegt, beispielsweise wenn der Abstand zwischen Lautsprecher L und Mikrofon M unbekannt ist, muß dieser Wert $i_0$ geschätzt werden. Die Schätzung des Wertes $i_0$ erfolgt aus besonders guten Messungen, wenn nämlich der Verlauf der Hüllkurve dem tatsächlichen Verlauf der Filterkoeffizienten $c_i$ möglichst gut entspricht. In Fig. 4 ist $i_0$=12.

Da der größte Filterkoeffizient $c_{max}$ der direkten Kopplung zwischen Lautsprecher L und Mikrofon M entspricht und damit seine Lage ix, in Fig. 4 ix=16, ein Maß für den kürzesten Weg eines Echos markiert, sollten alle Filterkoeffizienten $c_i$ sehr klein sein, für die i≤ix gilt. Daher war in Gleichung (7) $h_i(j)=0$ für i<ix.

Dies trifft bei realen Systemen oftmals nicht zu. Deshalb ist es zweckmäßig, das Verfahren zu erweitern und die Abweichungen der Filterkoeffizienten $c_i$ vom Wert Null oder von einer zu erwartenden Hüllkurve ebenfalls für die weiteren Verfahrensschritte zu berücksichtigen. Dazu wird für diese Filterkoeffizienten $c_i$ eine zutreffendere heuristische Hüllkurve angegeben, die eine a priori Wahrscheinlichkeit dafür darstellt, daß in unmittelbarer Nähe von $c_{max}$ für i<ix noch weitere Filterkoeffizienten $c_i$ mit kleinerer Größe existieren können, wie es in Fig. 2 gezeigt ist. Daher wird hierfür eine rasch, beispielsweise exponentiell, abfallende Hüllkurve wie folgt angenommen:

$$(8) \qquad h_i(j)=\begin{cases} c_{max}(j) \cdot \dfrac{ix - i_0}{i - i_0} & \text{für } (ix+1) \leq i \leq n \\ c_{max} & \text{für } i = ix \\ c_{max}(j) \cdot \dfrac{1}{(ix - i + 1)^p} & \text{für } i < ix \text{ und } p \geq 1 \end{cases}$$

Fig. 5 zeigt den Verlauf der Hüllkurve gemäß Gl. (8) mit ix=16, $i_0$ = 12 und p=1,2.

Die Gleichungen (7) und (8) zeigen somit verschiedene Möglichkeiten der Definition einer Hüllkurve über den gesamten Bereich der Filterkoeffizienten $c_i$ mit einem Maximum bei ix.

Für den Fall, daß in einer bestimmten physikalischen Anordnung von Lautsprecher L und Mikrofon M mehrere akustische Wege mit unterschiedlichen Schallgeschwindigkeiten existieren, wird eine übergeordnete Hüllkurve Hü(j) bestimmt, die sich aus der Überlagerung der Hüllkurve $H_1(j)$ für die Schallgeschwindigkeit $v_1$ mit der Hüllkurve $H_2(j)$ für die Schallgeschwindigkeit $v_2$ zusammensetzt.

Eine solche Situation liegt beispielsweise dann vor, wenn der Schall vom Lautsprecher L sowohl über das Endgerätegehäuse selbst mit der Schallgeschwindigkeit $v_1$ als auch durch die Luft mit der Schallgeschwindigkeit $v_2$ auf das Mikrofon M trifft, wobei $v_1 > v_2$ gilt.

Wie in Fig. 8 dargestellt, werden dann zwei unterschiedlich große maximale Filterkoeffizienten $c_{max1}$ und $c_{max2}$ beispielsweise bei $ix_1$ = 16 und $ix_2$ = 13 gemessen. Für jeden dieser $c_{max}$ -Werte läßt sich sodann eine eigene Hüllkurve $H_1(j)$ und $H_2(j)$ berechnen mit

$$(8a) \qquad H_1(j)=\{h_{11}(j), h_{12}(j), ..., h_{1n}(j)\} \qquad \text{und}$$

$$H_2(j)=\{h_{21}(j), h_{22}(j), ..., h_{2n}(j)\}.$$

Die resultierende Hüllkurve Hü(j) wird gemäß

$$(8b)\qquad Hü(j)=\{hü_1(j), hü_2(j), ..., hü_n(j)\}$$

mit $hü_i(j)=\max\{h_{i1}(j), h_{i2}(j), ..., h_{in}(j)\}$
gebildet.

Für einen Satz Filterkoeffizienten C(j) zum Zeitpunkt j gemäß

$$(9)\qquad C(j)=\{c_1(j), c_2(j), c_3(j), ..., c_n(j)\}$$

wird nun aus den Abweichungen von einer Hüllkurve ein Fehlermaß F(j) definiert, das aus der Summe der Quadrate der Teilfehler $f_i(j)$ oder aus den Beträgen der Teilfehler $f_i(j)$ selbst wie folgt gebildet wird:

$$(10)\qquad Fa(j)=\sum f_i^2(j) \qquad \text{oder}$$

$$Fb(j)=\sum_i |f_i(j)|$$

mit den Werten für die Teilfehler $f_i(j)$ über alle Filterkoeffizienten $c_i$

$$(11)\qquad f_i(j)=\begin{cases}|c_i|-h_i & \text{wenn } (|c_i|-h_i)>0 \text{ und } 1\leq i\leq n\\ 0 & \text{sonst}\end{cases}$$

oder Werte für die Teilfehler $f_i(j)$ nur über die Filterkoeffizienten $c_i$, für die $i>i_x$ ist,

$$(12)\qquad f_i(j)=\begin{cases}|c_i|-h_i & \text{wenn } (|c_i|-h_i)>0 \text{ und } ix\leq i\leq n\\ 0 & \text{sonst}\end{cases}$$

oder Werte für die Teilfehler $f_i(j)$ nur über den Teil der Filterkoeffizienten $c_i$, für die $i>i_1$ mit $i_1$ - (1, ..., 2)-$\frac{n}{3}$ ist,

$$(13)\qquad f_i(j)=\begin{cases}|c_i|-h_i & \text{wenn } (|c_i|-h_i)>0 \text{ und } i_1\leq i\leq n\\ 0 & \text{sonst}\end{cases}$$

Zu jedem Satz Filterkoeffizienten C(j) kann also fortlaufend ein Fehlermaß Fa(j) oder Fb(j) ermittelt werden, das als Qualitätsmaß für diesen Satz Filterkoeffizienten C(j) dient.

Gemäß Fig. 6 werden innerhalb eines Zeitfensters 61 der Länge m aufeinanderfolgende Sätze Filterkoeffizienten C(j)={C(j-1) ; C(j-2); C(j-3); ...; C(j-m)} gespeichert, wobei für jeden Satz Filterkoeffizienten C(j) eine wahrscheinliche Hüllkurve H(j) geschätzt wird und somit ein jeweils dazugehöriges Fehlermaß F(j)={F(j-1) ; F(j-2); F(j-3); ...; F(j-m)} berechnet und ebenfalls gespeichert wird.

Innerhalb des Zeitfensters 61 der Lange m wird der Satz Filterkoeffizienten $C(j)_{opt}$ mit dem kleinsten Fehlermaß $F(j)_{min}$ ausgewählt und weiterverarbeitet. Diese Auswahl wird fortlaufend getroffen. Aus dem Zeitfenster 61 fällt mit jedem Zeitschritt ein Wertepaar Satz Filterkoeffizienten C(j) und Fehlermaß F(j) heraus, und ein neues Wertepaar wird aufgenommen.

Zusammengefaßt ergibt sich folgender Verfahrensablauf:

1. Fortlaufende Berechnung von Sätzen Filterkoeffizienten C(j) nach dem NLMS-Algorithmus.

2. Für jeden Satz Filterkoeffizienten C(j) wird der größte Filterkoeffizient $c_{max}$ und seine zeitliche Lage i=ix ermittelt, so daß daraus eine wahrscheinliche Hüllkurve H(j) und damit ein zugehöriges Fehlermaß F(j) berechnet werden kann.

3. Es werden aufeinanderfolgende Sätze Filterkoeffizienten C(j) mit dazugehörigen Fehlermaßen F(j) über eine Dauer von m Zeitintervallen gespeichert.

4. Innerhalb des Zeitfensters der Länge m wird jeweils der Satz Filterkoeffizienten $C(j)_{opt}$ ausgewählt, der das kleinste Fehlermaß $F(j)_{min}$ besitzt, d.h. aus

$$(14) \qquad F(x)=\min\{F(j-m+1); F(j-m+2); ...; F(j)\}$$

wird x bestimmt und der zugehörige Satz Filterkoeffizienten

$$(15) \qquad C(j=x)=C(j)_{opt}$$

als optimal ausgewählt und für die folgende Echokompensation weiterverarbeitet, so daß damit in dem Zeitfenster ein Platz für einen neuen aktuellen Satz Filterkoeffizienten C(j) frei wird.

Für die technische Realisierung des Verfahrens dient eine in Fig. 7 dargestellte Schaltungsanordnung. Zur Kompensation eines Echos e(t) in gestörter Umgebung, das von dem Lautsprecher L über einen Reflektor R1 zu dem Mikrofon M gelangt, besteht die Schaltungsanordnung aus einem ersten digitalen Filter 1, einem zweiten digitalen Filter 7 sowie aus einer Baugruppe 8 für die Berechnung der Sätze Filterkoeffizienten C(j) und für die Speicherung und Auswahl der Bestwerte der Sätze Filterkoeffizienten $C(j)_{opf}$. Mit dem ersten digitalen Filter 1 werden zu dem Eingangssignal x(k-τ) fortlaufend nach dem NLMS-Algorithmus die Filterkoeffizienten $c_i$ berechnet. Das Ausgangssignal 4 des ersten digitalen Filters 1 wird von dem echobehafteten und analog/digital gewandelten Signal des Mikrofons ms (t) subtrahiert und liefert ein Signal y(k), das jedoch möglicherweise noch fehlerbehaftet sein kann und deshalb nicht weiterverarbeitet wird. In der Baugruppe 8 erfolgt die Speicherung und Auswahl der Sätze Filterkoeffizienten C(j).Der jeweils im Speicher vorhandene optimale Satz Filterkoeffizienten $C(j)_{opt}$ wird in das zweite digitale Filter 7 geladen, dessen Ausgangssignal 9 von dem analog/digital gewandelten echobehafteten Mikrofonsignal ms(t) subtrahiert wird. Somit wird ein Ausgangssignal 10 gebildet, das von Echos in gestörter Umgebung im wesentlichen befreit ist.

Es ist möglich, den Speicheraufwand für die Durchführung des Verfahrens zu reduzieren, indem in dem Zeitfenster 61 nicht alle Sätze Filterkoeffizienten C(j) mit den dazugehörigen Fehlermaßen F(j) gespeichert werden, sondern nur die, bei denen das Fehlermaß F(j) kleiner als ein bestimmter Schwellwert thrs ist. Damit entfallen bereits vor der Speicherung die für eine Weiterverarbeitung ungeeigneten Sätze Filterkoeffizienten C(j).

Bei einer weiteren Realisierungsvariante kann auf das zweite digitale Filter 7 verzichtet werden. Dazu wird nur ein aktueller Satz Filterkoeffizienten C(j) mit dem dazugehörigen Fehlermaß F(j) in einem Speicherfeld zwischengespeichert, wenn das Fehlermaß F(j) kleiner als ein vorgegebener Schwellwert thrs ist, d.h. $F(j) < thrs$. Ein zuvor gespeicherter Satz Filterkoeffizienten C(j-q) wird dabei überschrieben. Überschreitet das Fehlermaß F(j) den vorgegebenen Schwellwert thrs, so wird der aktuelle Satz Filterkoeffizienten C(j) nicht gespeichert, und es wird sofort der zuletzt gespeicherte Satz Filterkoeffizienten C(j-q), für den die Bedingung $F(j-q)<thrs$ erfüllt war, in das erste digitale Filter 1 zurückgeladen. Mit diesem Satz Filterkoeffizienten C(j-q) wird dann weitergerechnet.

Es ist möglich, den Aufwand für die Berechnung des Fehlermaßes F(j) zu reduzieren und damit auch die Berechnung zu beschleunigen, wenn die Tatsache ausgenutzt wird, daß die Werte der Filterkoeffizienten $c_i$ bei richtiger Einstellung des digitalen Filters ausgehend von einem Maximalwert $c_{max}=c_{ix}$, herrührend von einem Echo mit dem kürzesten zurückgelegten Weg, kontinuierlich kleiner werden müssen. Bei einer Gesamtzahl n Filterkoeffizienten $c_i$ werden die Werte der Filterkoeffizienten $c_i$ besonders klein, für die gilt $ix<i_1$ mit $i_1 \approx \frac{n}{3}$ und $i_1<i<n$. Somit kann ein vereinfachtes Fehlermaß F(j) definiert werden, indem gemäß Gleichungen (10) und (13) nur die Fehlerwerte $f_i$ berechnet werden, für die $\approx \frac{n}{3} < i \leq n$ gilt, d.h. Fehlerwerte $f_i$ für Filterkoeffizienten $c_i$ mit höheren Ordnungszahlen.

Eine weitere Vereinfachung ist möglich, wenn anstelle der Fehlerwerte $f_i$ direkt die Werte der Filterkoeffizienten $c_i$ für die Berechnung des Fehlermaßes F(j) verwendet werden. Es entfällt dann die Berechnung der Werte $h_i$ für die Hüllkurve. Die vereinfachten Fehlermaße werden dann gemäß folgender Gleichungen berechnet:

$$(16)\qquad Fa(j)=\sum_i c_i^2(j)\qquad \text{oder}$$

$$Fb(j)=\sum_i |c_i(j)|\qquad \text{mit } \frac{n}{3}\leq i\leq n$$

Die Grenze $\frac{n}{3}$ in der Ungleichung ist unkritisch, sie kann auch $2\cdot\frac{n}{3}$ betrogen. Es muß nur gewährleistet sein, daß die Anzahl der Filterkoeffizienten $c_i$ größer als zehn ist, die zur Berechnung verwendet werden. Mit diesem so definierten Fehlermaß F(j) werden Fehleinstellungen des Satzes Filterkoeffizienten C(j) unter den angegebenen Bedingungen mit ausreichender Genauigkeit erfaßt. Der für die Bewertung des Fehlermaßes F(j) festzulegende Schwellwert thrs wird der Berechnungsmethode der Fehlermaße F(j) gemäß Gleichungen (10) und (14) jeweils angepaßt.

Das erfindungsgemäße Verfahren bietet auch die Möglichkeit, eine Korrektur der Werte der Filterkoeffizienten $c_i$ vorzunehmen und somit die Werte des Fehlermaßes F(j) zu verkleinern, so daß damit auch ein engerer Bereich zur Weiterverarbeitung der Filterkoeffizienten mit dem Schwellwert thrs eingestellt werden kann.

Nach der Bestimmung der Lage ix für den maximalen Wert der Filterkoeffizienten $c_{max}$ können alle Filterkoeffizienten $c_i$ für die $i \leq ix$ gilt, zumindest zeitweise verkleinert oder auf Null gesetzt werden. Um rasche Änderungen der Lage von Lautsprecher L und Mikrofon M und von Reflektoren R1, R2 und R3 zu erfassen, werden periodisch alle Filterkoeffizienten $c_i$ berechnet. Daraus wird der jeweils aktuelle maximale Wert des Filterkoeffizienten $c_{max}$ und seine Lage ix bestimmt, und sodann werden für kurze Zeit die Filterkoeffizienten $c_i$ verkleinert oder auf Null gesetzt, für die $i < ix$ ist. Für eine Verkleinerung der Filterkoeffizienten $c_i$ empfiehlt sich eine Bewertung mit der Hüllkurve $h_i(k)$ unter Beibehaltung des Vorzeichens des Filterkoeffizienten $c_i$ gemäß

$$(17)\qquad c_i(k)_{korr}=\text{sign}[c_i(k)]\cdot h_i(k)$$

für $i \leq ix$

In einer weiteren Ausgestaltung der Erfindung wird die Bestimmung der Filterkoeffizienten $c_i$ von der geschätzten Hüllkurve $h_i(k)$ gemäß der modifizierten Gleichung (1) abhängig gemacht:

$$(18)\qquad c_i(k)=c_i(k-1)+\alpha\cdot\frac{y(k)\cdot x(k-\tau-i)}{\sum_{q=1}^{n}x^2(k-\tau-q)}\cdot h_i(k)$$

Eine weitere Möglichkeit zur optimalen Bestimmung von Filterkoeffizienten $c_i$ besteht darin, falsch eingestellte Filterkoeffizienten $c_i$ durch einen besseren Schätzwert zu ersetzen. Filterkoeffizienten $c_i$, deren Betrag die Hüllkurve weit übersteigt sind wahrscheinlich grob falsch eingestellt. Ein besserer Schätzwert für diese Filterkoeffizienten $c_i$ liegt dann vor, wenn nur das Vorzeichen der Filterkoeffizienten $c_i$ beibehalten wird und sein Betrag durch den Wert der Hüllkurve $h_i(k)$ an dieser Stelle ersetzt wird. Dazu wird beispielsweise geprüft, ob der Betrag eines Filterkoeffizienten $c_i$ mehr als z-mal so groß wie der zugehörige Wert $h_i$ der Hüllkurve ist. Wenn ja, dann wird sein Betrag auf den Wert $h_i$ der Hüllkurve reduziert, d.h.

$$(19)\qquad \text{wenn } |c_i(k)| > z\cdot h_i(k), \text{ dann } c_i(k)=\text{sign}[c_i(k)]\cdot h_i(k)$$

mit beispielsweise $1 < z < 3$

Aus dem Verhältnis von echobehaftetem Signal zu dem Signal mit gedämpften Echos an der ersten Summierschaltung 32, die dem ersten digitalen Filter 1 zugeordnet ist, siehe Fig. 1 und Fig. 7, und/oder an der zweiten Summierschaltung 31, die dem zweiten digitalen Filter 7 zugeordnet ist, siehe Fig. 7, läßt sich jeweils ein Qualitätsmaß für die Echokompensation ableiten, das ergänzend zum Fehlermaß sowohl zur Kontrolle eines richtig eingestellten digitalen Filters als auch zur Steuerung der Schrittweite $\alpha$ des NLMS-Algorithmus dient.

Mit der Erfindung lassen sich je nach Art und Umfang der Störungen in der Umgebung eines Telekommunikationsendgerätes angepaßte und kostengünstige Lösungen für die wirksame Kompensation von Echos angeben.

## Patentansprüche

1. Verfahren zur adaptiven Echokompensation mit einem digitalen Filter, dessen Anzahl n Filterkoeffizienten ($c_i$), oder kurz dessen Satz Filterkoeffizienten (C(j)), nach dem Normalized-Least-Mean-Square-Algorithmus berechnet wird, in einem Übertragungssystem, bei dem eine Kopplung zwischen einem Signalweg in Empfangsrichtung und einem Signalweg in Senderichtung auftritt,
**dadurch gekennzeichnet, dass**

   - der Satz Filterkoeffizienten (C(j)) mit einer Hüllkurve (H(j)) verglichen wird, wobei der Verlauf der Hüllkurve (H (j)) für ein digitales Filter mit einer Anzahl n Filterkoeffizienten ($c_i$) in Abhängigkeit vom grössten Wert ($c_{max}$) der Filterkoeffizienten ($c_i$)) und von seiner zeitlichen Lage ($i=i_x$) berechnet wird,
   - aus der Abweichung der Werte des Satzes Filterkoeffizienten (C(j)) von den von der Hüllkurve (H(j)) vorgegebenen Werten ein Fehlermaß (F(j)) errechnet wird,
   - nur der Satz Filterkoeffizienten (C(j)) zur Einstellung des digitalen Filters weiterverwendet wird, für den das Fehlermaß (F(j)) einen Schwellwert unterschreitet.

2. Verfahren nach Anspruch 1,
**dadurch gekennzeichnet,**
**dass** der größte Wert ($c_{max}$) des Satzes Filterkoeffizienten (C(j)) ein Wert der Hüllkurve (H(j)) ist.

3. Verfahren nach Anspruch 1,
**dadurch gekennzeichnet, daß** das Fehlermaß (F(j)) aus der Summe der absoluten Beträge der Abweichungen oder aus der Summe der Quadrate der Abweichungen der Werte der Filterkoeffizienten ($c_i$) von den Werten ($h_i$) der Hüllkurve (H(j)) berechnet wird.

4. Verfahren nach Anspruch 1,
**dadurch gekennzeichnet, daß** das Fehlermaß (F(j)) aus der Summe der absoluten Beträge der positiven Abweichungen oder aus der Summe der Quadrate der positiven Abweichungen der Werte der Filterkoeffizienten ($c_i$) von den Werten ($h_i$) der Hüllkurve (H(j)) berechnet wird.

5. Verfahren nach Anspruch 1 oder 3 oder 4,
**dadurch gekennzeichnet, daß** das Fehlermaß (F(j)) aus den Abweichungen eines Teils der Filterkoeffizienten ($c_i$) des Satzes Filterkoeffizienten (C(j)) von den Werten ($h_i$) der Hüllkurve (H(j)) berechnet wird.

6. Verfahren nach Anspruch 5,
**dadurch gekennzeichnet, daß** das Fehlermaß (F(j)) aus den Abweichungen der Filterkoeffizienten ($c_i$) mit großer Ordnungszahl i innerhalb des Satzes Filterkoeffizienten (C(j)) von den Werten ($h_i$) der Hüllkurve (H(j)) berechnet wird.

7. Verfahren nach Anspruch 1,
**dadurch gekennzeichnet, daß** für die Dauer (m) eines Zeitfensters eine Anzahl von Sätzen Filterkoeffizienten (C(j-1), C(j-2), ..., C(j-m)) mit den dazugehörigen Fehlermaßen (F(j-1), F(j-2), ..., F(j-m)) in einem Speicher (82) zwischengespeichert werden und daß aus diesem Speicher (82) der Satz Filterkoeffizienten (C(j)) mit dem zugehörigen kleinsten Fehlermaß zur Weiterverarbeitung ausgelesen wird.

8. Verfahren nach Anspruch 1,
**dadurch gekennzeichnet, daß** für ein erstes digitales Filter (1) ein aktueller Satz Filterkoeffizienten (C(j)) berechnet und dafür ein Fehlermaß (F(j)) ermittelt wird, daß der Satz Filterkoeffizienten (C(j)) mit dem dazugehörigen Fehlermaß (F(j)) in einem Speicher zwischengespeichert wird und daß aus dem Speicher (82) aus einer Anzahl von Sätzen Filterkoeffizienten (C(j)), derjenige mit dem kleinsten Fehlermaß (F(j)) in ein zweites digitales Filter (7) geladen wird, dessen Ausgangssignal (9) zur Echokompensation eines echobehafteten Signals (ms(t)) verwendet wird.

9. Verfahren nach Anspruch 1,
**dadurch gekennzeichnet, daß** jeweils ein Satz Filterkoeffizienten (C(j)) mit dem dazugehörigen Fehlermaß (F(j)) zwischengespeichert wird, wenn das Fehlermaß (F(j)) einen definierten Schwellwert (thrs) unterschreitet und daß bei dem Auftreten eines aktuellen Satzes Filterkoeffizienten (C(j)) mit einem Fehlermaß (F(j)), das den definierten Schwellwert überschreitet, der gespeicherte Satz Filterkoeffizienten (C(j)) mit dem Fehlermaß (F(j)), das den definierten Schwellwert (thrs) unterschritten hat, in das digitale Filter zur Weiterverarbeitung zurückgeladen wird.

**10.** Verfahren nach Anspruch 1,
**dadurch gekennzeichnet, daß** die Werte des Satzes Filterkoeffizienten (C(j)), die die durch die Hüllkurve (H(j)) vorgegebenen Werte übersteigen, betragsmäßig auf die Werte der Hüllkurve (H(j)) reduziert werden.

**11.** Anordnung zur adaptiven Echokompensation mit einem ersten digitalen Filter (1) und einer Baugruppe (81) zur Berechnung des Satzes Filterkoeffizienten (C(j)) nach dem Normalized-Least-Mean-Square-Algorithmus,
**dadurch gekennzeichnet,**
**dass** dem ersten digitalen Filter (1) eine Baugruppe (82) zur Speicherung mindestens eines Satzes Filterkoeffizienten (C(j)), zum Vergleichen des Satzes Filterkoeffizienten (C(j)) mit einer Hüllkurve (H(j)), wobei der Verlauf der Hüllkurve (H(j)) für ein digitales Filter mit einer Anzahl n Filterkoeffizienten ($c_i$) in Abhängigkeit vom größten Wert ($c_{max}$) der Filterkoeffizienten ($c_i$) und von seiner zeitlichen Lage ($i=i_x$) berechnet ist, und zur Berechnung mindestens eines Fehlermaßes (F(j)) aus der Abweichung der Werte des Satzes Filterkoeffizienten (C(j)) von den von der Hüllkurve (H(j)) vorgegebenen Werten.

## Claims

**1.** Method for adaptive echo compensation with a digital filter whose number n of filter coefficients ($c_i$), or in brief its set of filter coefficients (C(j)) is calculated according to the normalised least mean square algorithm, in a transmission system in which coupling takes place between a signal path in the reception direction and a signal path in the transmission direction, **characterised in that**

- the set of filter coefficients (C(j)) is compared with an envelope curve (H(j)), the profile of the envelope curve (H(j)) being calculated for a digital filter with a number n of filter coefficients ($c_i$) as a function of the largest value ($c_{max}$) of the filter coefficients ($c_i$) and its chronological position ($i=i_x$),
- an error measure (F(j)) is computed from the deviation of the values of the set of filter coefficients (C(j)) from the values specified by the envelope curve (H(j)),
- only the set of filter coefficients (C(j)) for which the error measure (F(j)) is less than a threshold value are used further to adjust the digital filter.

**2.** Method according to Claim 1, **characterised in that** the largest value ($c_{max}$) of the set of filter coefficients (C(j)) is a value of the envelope curve (H(j)).

**3.** Method according to Claim 1, **characterised in that** the error measure (F(j)) is calculated from the sum of the absolute magnitudes of the deviations or from the sum of the squares of the deviations of the values of the filter coefficients ($c_i$) from the values ($h_i$) of the envelope curve (H(j)).

**4.** Method according to Claim 1, **characterised in that** the error measure (F(j)) is calculated from the sum of the absolute magnitudes of the positive deviations or from the sum of the squares of the positive deviations of the values of the filter coefficients ($c_i$) from the values ($h_i$) of the envelope curve (H(j)).

**5.** Method according to Claim 1 or 3 or 4, **characterised in that** the error measure (F(j)) is calculated from the deviations of some of the filter coefficients ($c_i$) of the set of filter coefficients (C(j)) from the values ($h_i$) of the envelope curve (H(j)).

**6.** Method according to Claim 5, **characterised in that** the error measure (F(j)) is calculated from the deviations of the filter coefficients ($c_i$) having a high order i within the set of filter coefficients (C(j)) from the values ($h_i$) of the envelope curve (H(j)).

**7.** Method according to Claim 1, **characterised in that** a number of sets of filter coefficients (C(j-1), C(j-2), ..., C(j-m)) with the associated error measures (F(j-1), F(j-2), ..., F(j-m)) are temporarily stored in a memory (82) for the duration (m) of a time window, and **in that** the set of filter coefficients (C(j)) with the smallest associated error measure is read out of this memory (82) for further processing.

**8.** Method according to Claim 1, **characterised in that** a current set of filter coefficients (C(j)) is calculated for a first digital filter (1), and an error measure (F(j)) is determined for this, **in that** the set of filter coefficients (C(j)) with the

associated error measure (F(j)) is temporarily stored in a memory, and **in that** among a number of sets of filter coefficients (C(j)), those with the smallest error measure (F(j)) are loaded from the memory (82) into a second digital filter (7), the output signal (9) of which is used for echo compensation of a signal (ms(t)) affected by echo.

**9.** Method according to Claim 1, **characterised in that** a set of filter coefficients (C(j)) with the associated error measure (F(j)) is respectively stored temporarily when the error measure (F(j)) is less than a defined threshold value (thrs) and, when a current set of filter coefficients occurs (C(j)) with an error measure (F(j)) which exceeds the defined threshold value, the stored set of filter coefficients (C(j)) with the error measure (F(j)) which was less than the defined threshold value (thrs) is loaded back into the digital filter for further processing.

**10.** Method according to Claim 1, **characterised in that** the values of the set of filter coefficients (C(j)) which exceed the values specified by the envelope curve (H(j)) are reduced in magnitude to the values of the envelope curve (H (j)).

**11.** Arrangement for adaptive echo compensation with a first digital filter (1) and a module (81) for calculating the set of filter coefficients (C(j)) according to the normalised least mean square algorithm, **characterised in that** a module (82) for storing at least one set of filter coefficients (C(j)), for comparing the set of filter coefficients (C(j)) with an envelope curve (H(j)), the profile of the envelope curve (H(j)) being calculated for a digital filter with a number n of filter coefficients ($c_i$) as a function of the largest value ($c_{max}$) of the filter coefficients ($c_i$) and its chronological position ($i=i_x$), and for calculating at least one error measure (F(j)) from the deviation of the values of the set of filter coefficients (C(j)) from the values specified by the envelope curve (H(j)), to the first digital filter (1).

## Revendications

**1.** Procédé pour l'annulation d'écho adaptative comprenant un filtre numérique, dont le nombre n de coefficients de filtre ($c_i$), ou en abrégé son ensemble de coefficients de filtre (C(j)), est calculé selon l'algorithme de Normalized-Least-Mean-Square, dans un système de transmission, dans lequel un couplage apparaît entre une course de signal dans le sens de réception et une course de signal dans le sens d'émission, **caractérisé en ce que**

- l'ensemble de coefficients de filtre (C(j)) est comparé avec une courbe enveloppante (H(j)), le tracé de la courbe enveloppante (H(j)) pour un filtre numérique avec un nombre n de coefficients de filtre ($c_i$) étant comparé en fonction de la valeur maximale ($c_{max}$) des coefficients de filtre ($c_i$) et de sa position dans le temps ($i = i_x$),
- un critère d'erreur (F(j)) est calculé à partir de l'écart des valeurs de l'ensemble de coefficients de filtre (C(j)) par rapport aux valeurs prédéfinies par la courbe enveloppante (H(j)),
- on réutilise seulement l'ensemble de coefficients de filtre (C(j)) pour le réglage du filtre numérique pour lequel le critère d'erreur (F(j)) est inférieur à une valeur seuil.

**2.** Procédé selon la revendication 1,
**caractérisé en ce que** la valeur maximale ($c_{max}$) de l'ensemble des coefficients de filtre (C(j)) est une valeur de la courbe enveloppante (H(j)).

**3.** Procédé selon la revendication 1,
**caractérisé en ce que** le critère d'erreur (F(j)) est calculé à partir de la somme des montants absolus des écarts ou de la somme des carrés des écarts des valeurs des coefficients de filtre ($c_i$) par rapport aux valeurs ($h_i$) de la courbe enveloppante (H(j)).

**4.** Procédé selon la revendication 1,
**caractérisé en ce que** le critère d'erreur (F(j)) est calculé à partir de la somme des montants absolus des écarts positifs ou de la somme des carrés des écarts positifs des valeurs des coefficients de filtre ($c_i$) par rapport aux valeurs de la courbe enveloppante (H(j)).

**5.** Procédé selon la revendication 1 ou 3 ou 4,
**caractérisé en ce que** le critère d'erreur (F(j)) est calculé à partir des écarts d'une partie des coefficients de filtre ($c_i$) de l'ensemble de coefficients de filtre (C(j)) par rapport aux valeurs ($h_i$) de la courbe enveloppante (H(j)).

**6.** Procédé selon la revendication 5,
**caractérisé en ce que** le critère d'erreur (F(j)) est calculé à partir des écarts des coefficients de filtre ($c_i$) avec un

grand nombre ordinal i à l'intérieur de l'ensemble de coefficients de filtre (C(j)) par rapport aux valeurs ($h_i$) de la courbe enveloppante (H(j)).

7. Procédé selon la revendication 1,
**caractérisé en ce que**, pour la durée (m) d'une fenêtre de temps, un certain nombre d'ensembles de coefficients de filtre (C(j-1), C(j-2),..., C(j-m)) est enregistré provisoirement avec les critères d'erreur (F(j-1), F(j-2),..., F(j-m)) correspondants dans une mémoire (82) et **en ce que**, à partir de cette mémoire (82), on lit l'ensemble de coefficients de filtre (C(j)) avec le plus petit critère d'erreur correspondant pour le traitement ultérieur.

8. Procédé selon la revendication 1,
**caractérisé en ce que**, pour un premier filtre (1) numérique, on calcule un ensemble actuel de coefficients de filtre (C(j)) et on détermine à cet effet un critère d'erreur (F(j)), **en ce que** l'ensemble de coefficients de filtre (C(j)) est mémorisé provisoirement avec le critère d'erreur (F(j)) correspondant dans une mémoire et **en ce que**, à partir de la mémoire (82), on charge à partir d'un certain nombre d'ensembles de coefficients de filtre (C(j)) celui présentant le plus petit critère d'erreur (F(j)) dans un second filtre (7) numérique, dont le signal de sortie (9) est utilisé pour l'annulation d'écho d'un signal (ms(t)) entaché d'échos.

9. Procédé selon la revendication 1,
**caractérisé en ce que**, à chaque fois un ensemble de coefficients de filtre (C(j)) est mémorisé provisoirement avec le critère d'erreur (F(j)) correspondant lorsque le critère d'erreur (F(j)) est inférieur à une valeur seuil (thrs) définie et **en ce que**, lors de l'apparition d'un ensemble actuel de coefficients de filtre (C(j)) avec un critère d'erreur (F(j)) qui est inférieur à la valeur seuil définie, l'ensemble mémorisé de coefficients de filtre (C(j)) est rechargé avec le critère d'erreur (F(j)), qui est inférieur à la valeur seuil (thrs) définie, dans le filtre numérique pour le retraitement.

10. Procédé selon la revendication 1,
**caractérisé en ce que** les valeurs de l'ensemble de coefficients de filtre (C(j)), qui dépassent les valeurs prédéfinies par la courbe enveloppante (H(j)) sont réduites au niveau du montant aux valeurs de la courbe enveloppante (H(j)).

11. Dispositif pour l'annulation adaptative d'écho avec un premier filtre (1) numérique et un ensemble (81) pour le calcul de l'ensemble de coefficients de filtre (C(j)) selon l'algorithme de Normalized-Least-Mean-Square,
**caractérisé en ce que**
dans le premier filtre (1) numérique, on a un ensemble (82) pour le stockage d'au moins un ensemble de coefficients de filtre (C(j)), pour la comparaison de l'ensemble de coefficients de filtre (C(j)) avec une courbe enveloppante (H (j)), le tracé de la courbe enveloppante (H(j)) étant calculé pour un filtre numérique avec un nombre n de coefficients de filtre ($c_i$) en fonction de la plus grande valeur ($c_{max}$) des coefficients de filtre ($c_i$) et de sa position dans le temps ($i = i_x$), et pour le calcul d'au moins un critère d'erreur (F(j)) à partir de l'écart entre la valeur de l'ensemble de coefficients de filtre (C(j)) et les valeurs prédéfinies par la courbe enveloppante (H(j)).

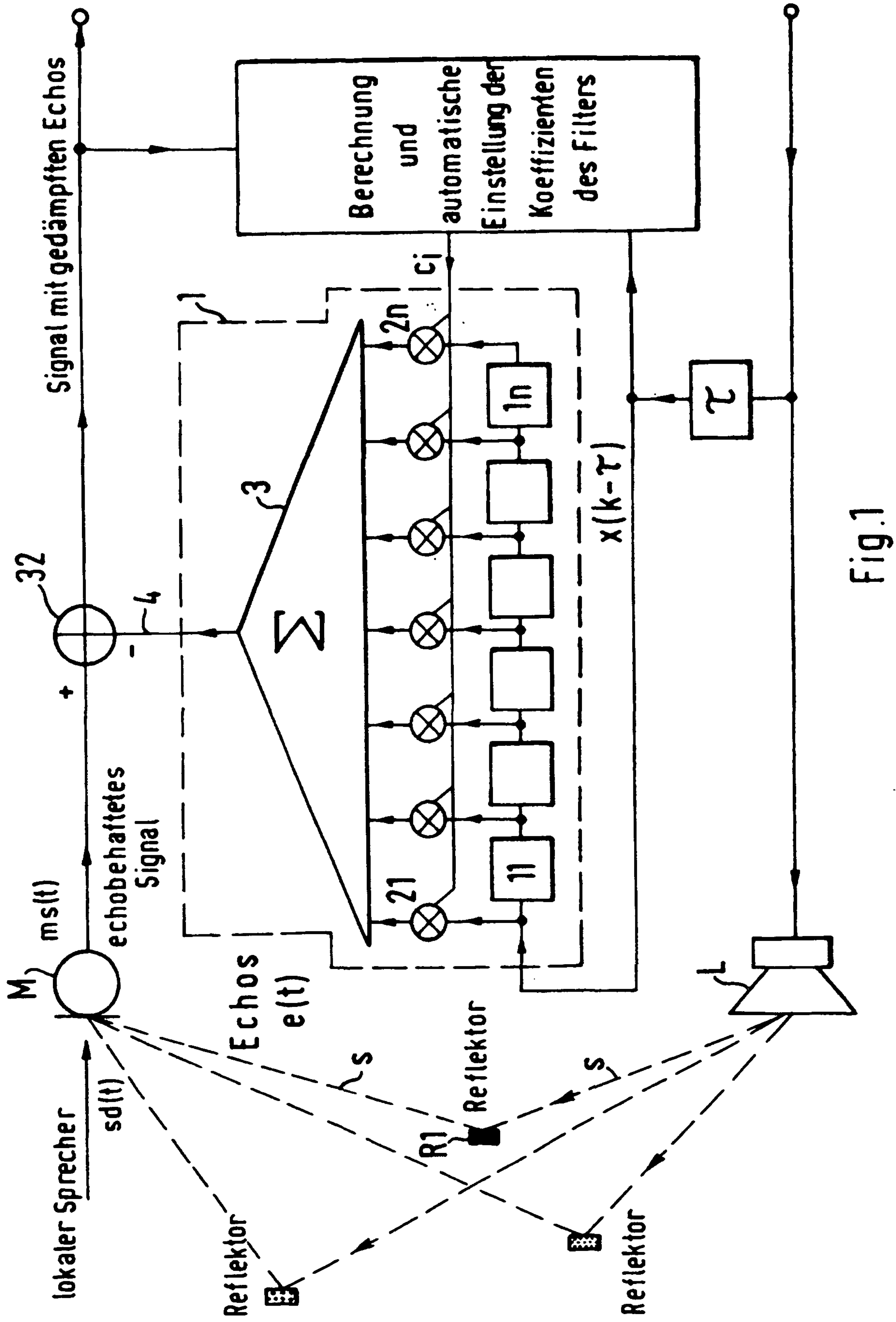

Signal mit gedämpften Echos
Berechnung und automatische Einstellung der Koeffizienten des Filters
ci
1
2n
1n
3
Σ
32
4
+
-
x(k-τ)
τ
M
ms(t)
echobehaftetes Signal
21
11
Echos e(t)
L
lokaler Sprecher
sd(t)
s
Reflektor
R1


Fig.1

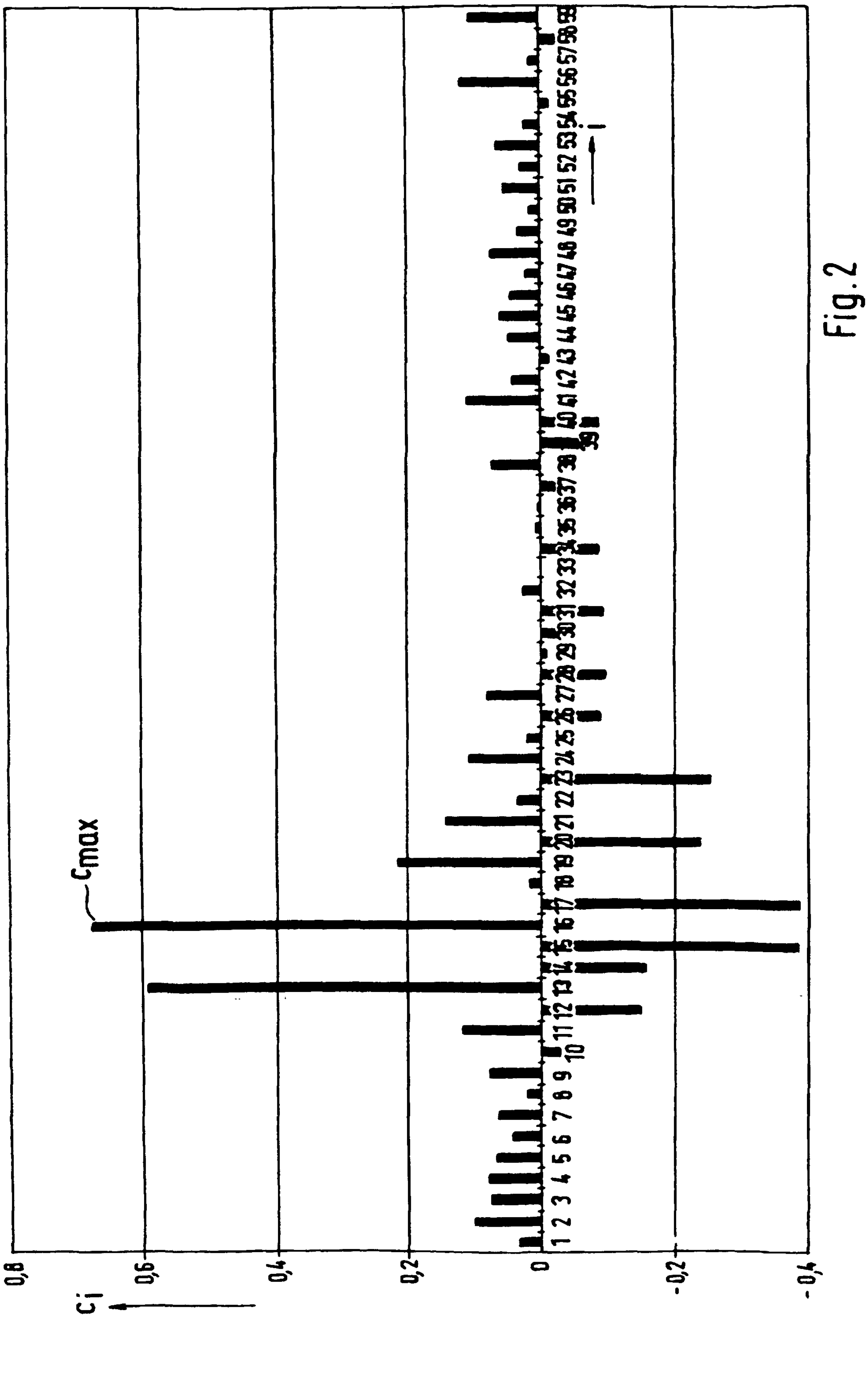


Fig. 2

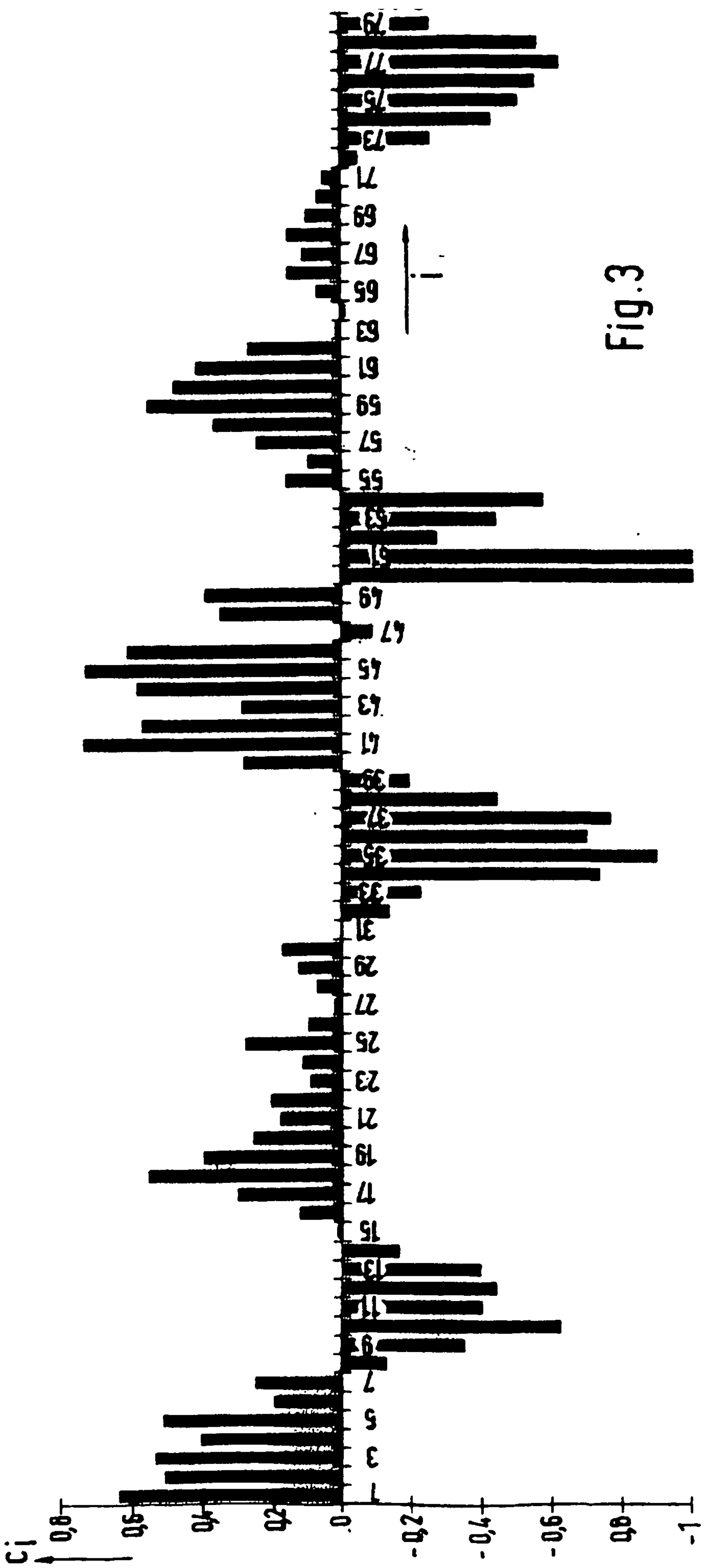
ci
i
0,8
0,6
0,4
0,2
0
-0,2
-0,4
-0,6
-0,8
-1
1
3
5
7
9
11
13
15
17
19
21
23
25
27
29
31
33
35
37
39
41
43
45
47
49
51
53
55
57
59
61
63
65
67
69
71
73
75
77
79

Fig.3

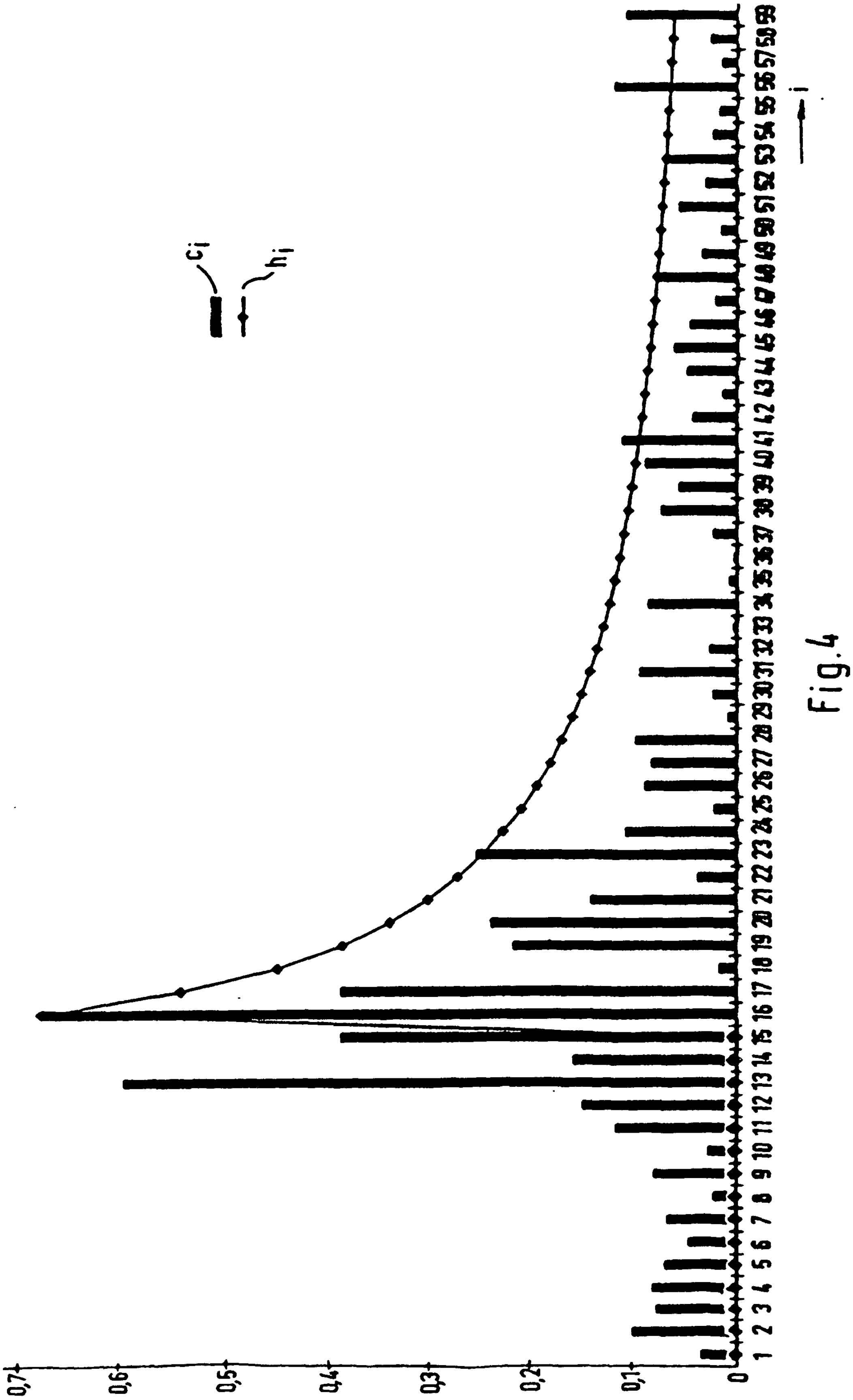


Fig.4

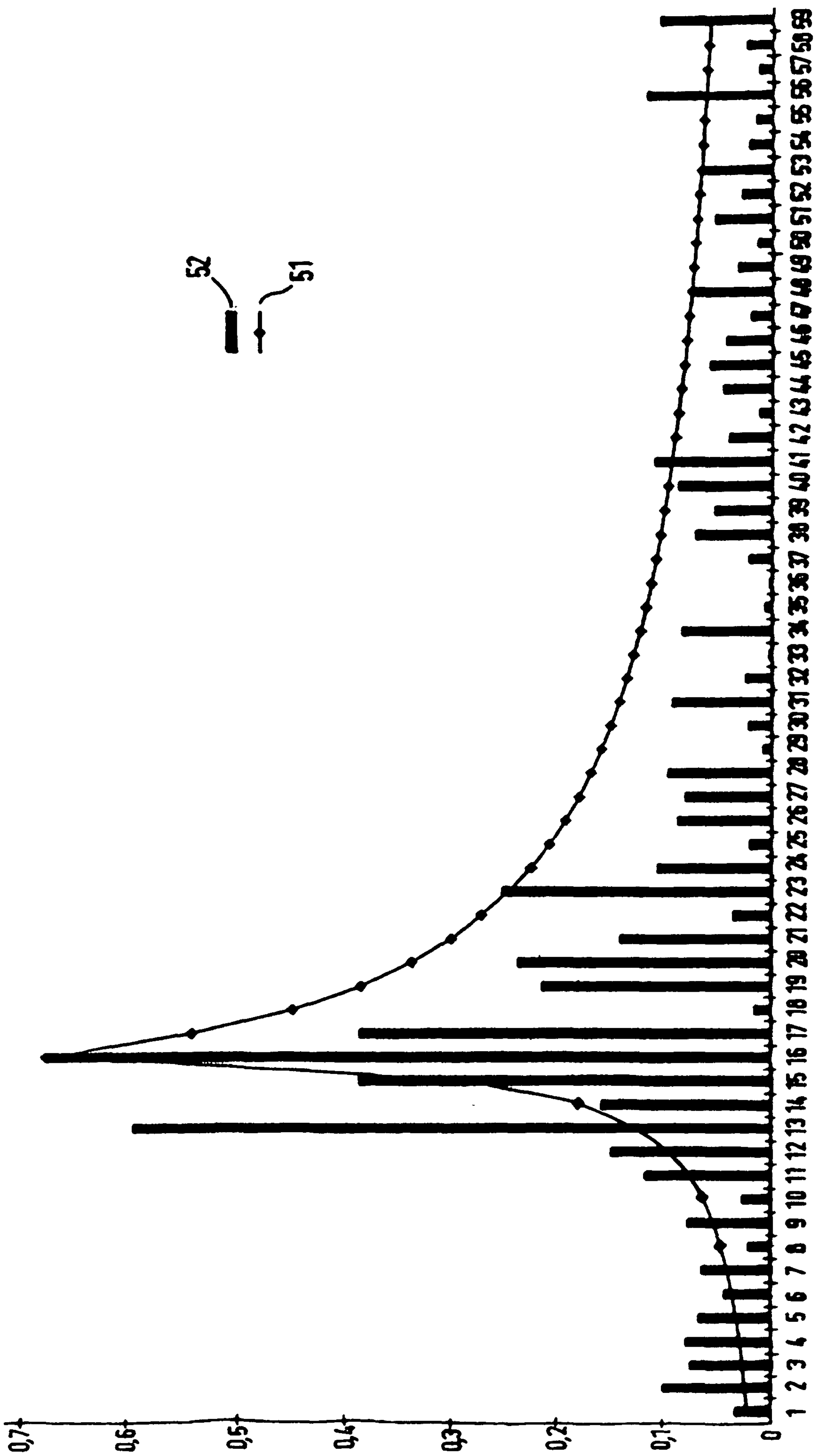


Fig.5

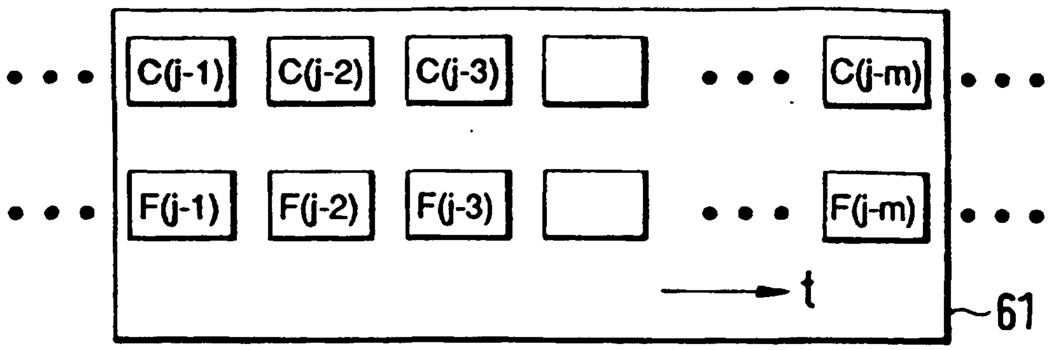


Fig.6

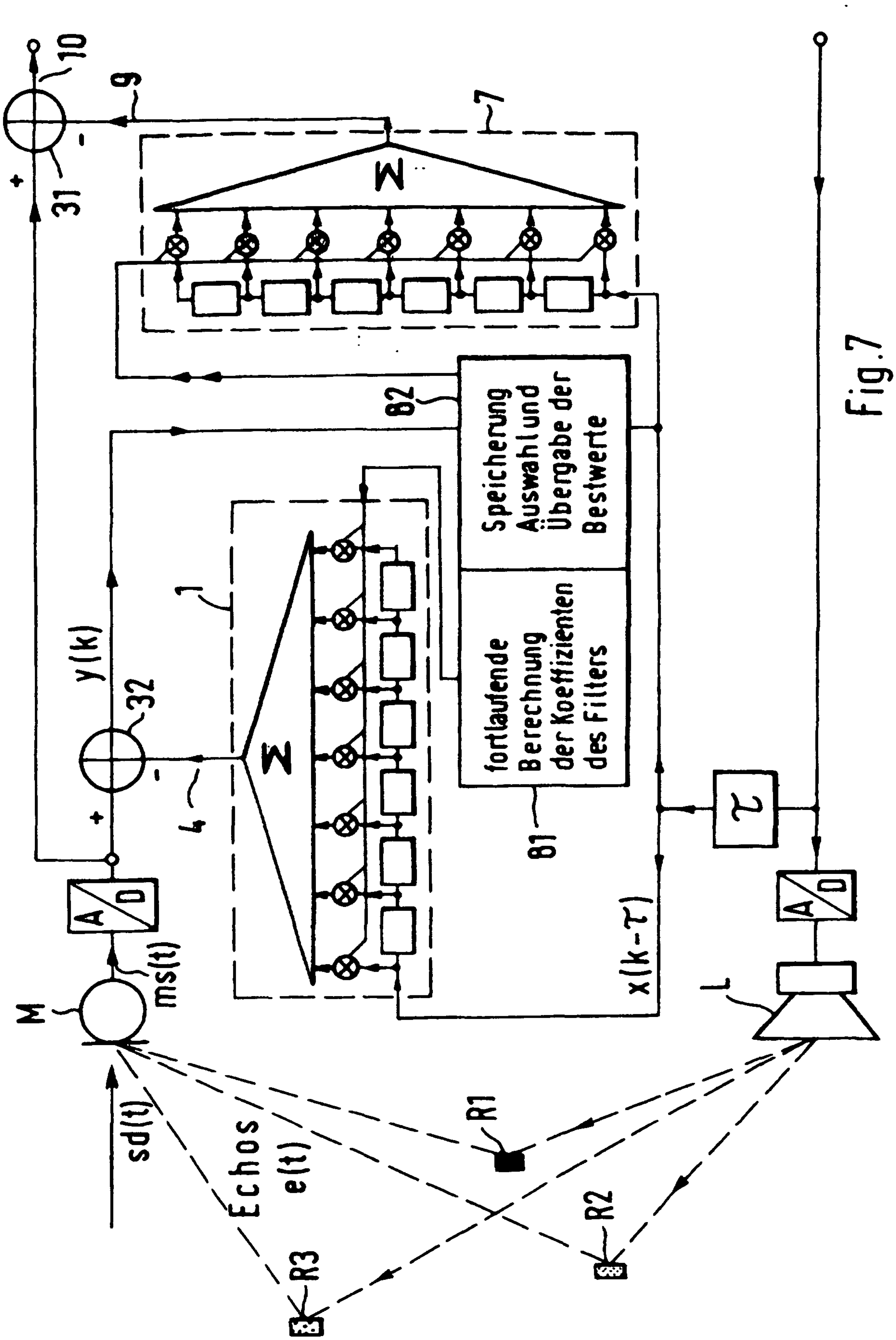
M
ms(t)
A/D
+
-
32
y(k)
31
10
9
7
M
Σ
1
4
82
Speicherung Auswahl und Übergabe der Bestwerte
fortlaufende Berechnung der Koeffizienten des Filters
81
x(k-τ)
τ
A/D
L
sd(t)
Echos e(t)
R1
R2
R3

Fig.7

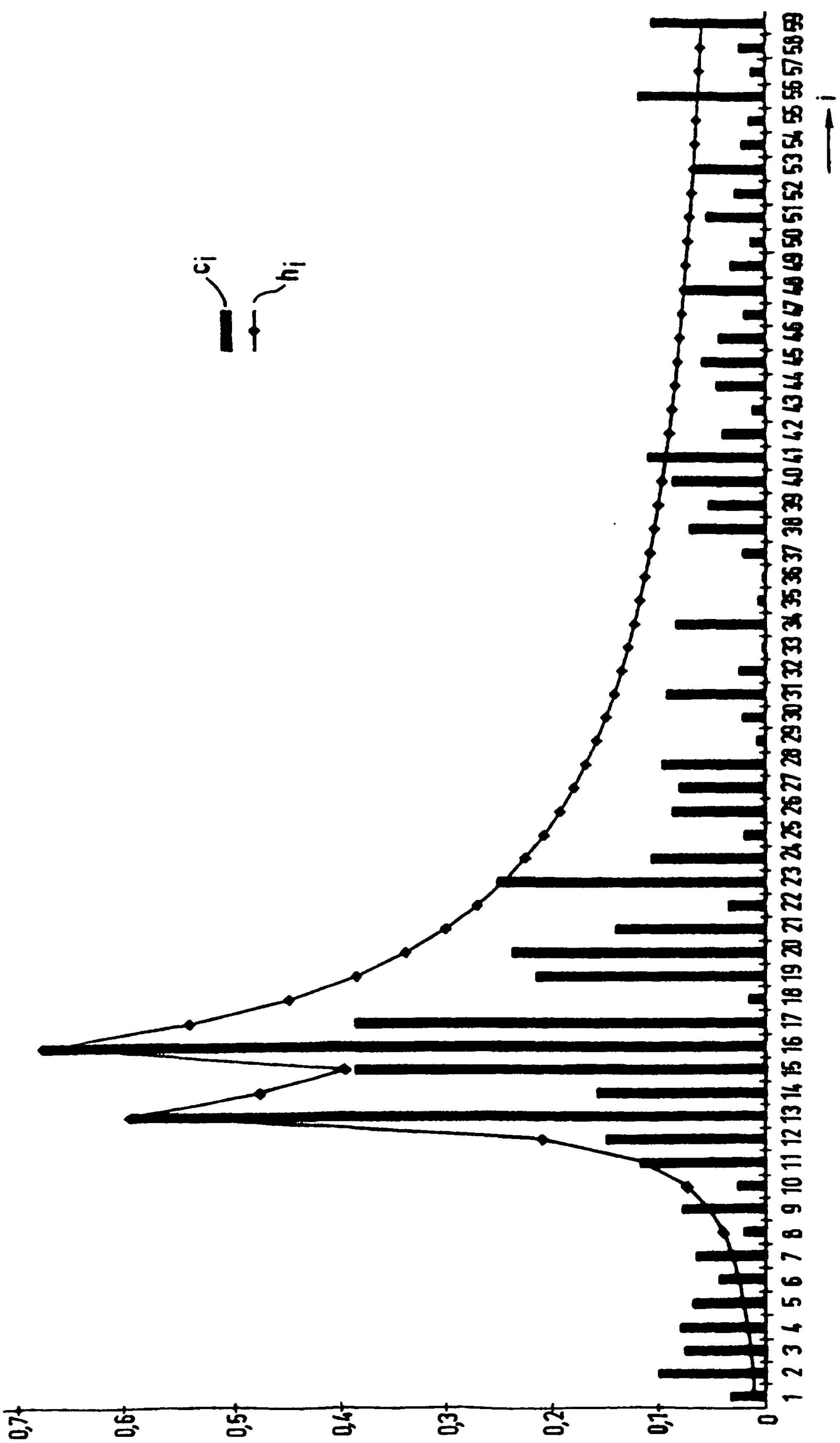
0
0,1
0,2
0,3
0,4
0,5
0,6
0,7
$c_i$
$h_i$
i
1 2 3 4 5 6 7 8 9 10 11 12 13 14 15 16 17 18 19 20 21 22 23 24 25 26 27 28 29 30 31 32 33 34 35 36 37 38 39 40 41 42 43 44 45 46 47 48 49 50 51 52 53 54 55 56 57 58 59

Fig.8